# EUROPEAN PATENT APPLICATION

(11) **EP 0 832 814 A1**
(43) Date of publication of application: **01.04.1998**
(21) Application number: 96307018.0
(22) Date of filing: 26.09.1996
(51) Int. Cl.: B62K 25/24, B62K 25/10

(54) **Bicycle suspension system**

(71) Applicant: Kendall-Torry, Peter, Sidmouth, Devon EX10 9AB (GB)
(72) Inventor: Kendall-Torry, Peter, Sidmouth, Devon EX10 9AB (GB)
(74) Representative: Craske, Stephen Allan

(57) **Abstract**

A frame has a first pair of generally upright forks 1 fixed with or steerably mounted from the frame. A wheel 42 is mounted on a spindle 44 between the first pair of forks, and a second pair of forks 4 is mounted in a generally upright position on opposite sides of said wheel. The upper ends of the second forks are mutually joined at 5, and the lower ends of said forks carry the spindle mounts for the wheel. Guide means 40, 46 and/or 11 permit relatively free movement of the second forks 4 generally in an up-and-down direction whilst constraining lateral movement of the second forks. A pair of resilient shock-absorbing elements 10, one on each side of the wheel, each act between the lower end 12 of a respective second fork adjacent to the respective spindle mount, or a component that moves therewith such as a link arm 2, and an abutment 11 fixed with a respective one of the first pair of forks.

## Description

### TECHNICAL FIELD OF THE INVENTION

This invention relates to suspension systems for pedal cycles.

### BACKGROUND

Many attempts have been made to add a resilient suspension to pedal cycle wheels (most commonly the front wheel) in order to improve the comfort of the ride.

In GB 2 130 983 A and GB 2 255 940 A the wheel spindle is mounted on a moveable pair of forks which extend in front of and generally parallel to a second, fixed pair of forks, and a pair of links, one on each side of the wheel, pivotally couple the lower ends of the two sets of forks. The upper ends of the moveable forks carry a common push rod which extends into a steering column to bear against a shock-absorbing compression spring.

The present invention seeks to provide a pedal cycle which is patentably different from any known forms of pedal cycle.

### SUMMARY OF THE INVENTION

The present invention proposes a pedal cycle comprising:
- a frame;
- a first pair of generally upright forks fixed with or steerably mounted from the frame;
- a wheel mounted on a spindle between said first pair of forks;
- a second pair of forks mounted in a generally upright position on opposite sides of said wheel, the upper ends of the second forks being mutually joined and the lower ends of said forks carrying spindle mounts for said wheel; and
- guide means arranged to permit movement of said second pair of forks generally in an up-and-down direction relative to said first pair of forks whilst constraining lateral movement of said second forks;
   characterised by a pair of resilient shock-absorbing elements, one on each side of the wheel, each acting between the lower end of a respective second fork adjacent to the respective spindle mount, or a component that moves therewith, and an abutment fixed with a respective one of the first pair of forks.

Such an arrangement reduces stresses in the second forks so that they can be more lightweight whilst, at the same time, allowing stronger and/or larger resilient elements to be employed. The arrangement also allows the guide means at the upper end of the second forks to be simplified.

The resilient elements may take various forms, e.g. compression springs and/or rubber bushes.

### BRIEF DESCRIPTION OF THE DRAWINGS

The following description and the accompanying drawings referred to therein are included by way of non-limiting example in order to illustrate how the invention may be put into practice. In the drawings:
Figure 1 is a diagrammatic side view of a suspension arrangement applied to the front wheel of a pedal cycle, and
Figure 2 is a side view of a rear wheel suspension of a pedal cycle.

### DETAILED DESCRIPTION OF THE DRAWINGS

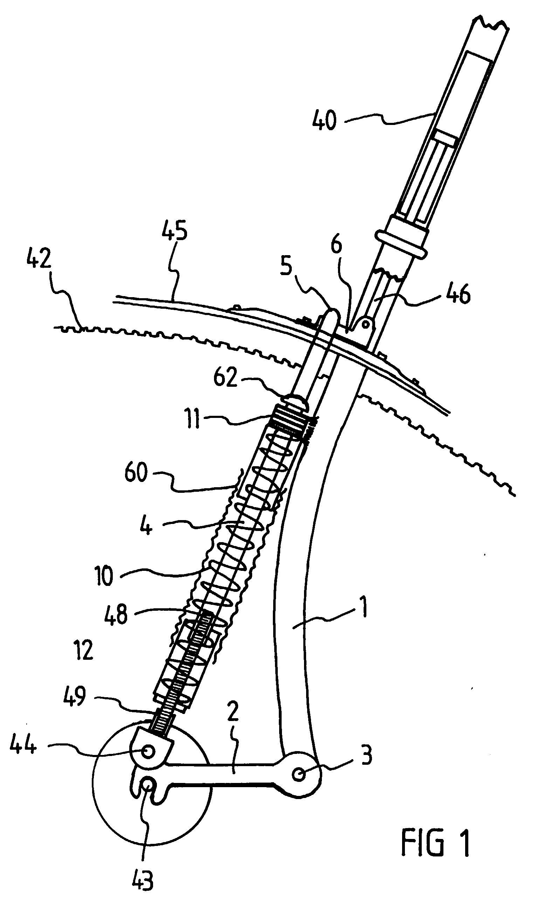

Referring firstly to Fig. 1, a pair of front forks 1, one of which is cut away for illustrative purposes, are mounted from the frame of a pedal cycle via a steering column 40. Although the steering column is inclined rearwards at the top, the forks are curved so that their lower portions extend substantially vertical as shown. A respective link arm 2 is pivotally coupled at 3 to the lower end of each fork 1 to project forwardly, and a wheel 42 is rotatably mounted via its spindle 43 between the forward ends of the links 2. The wheel can thus move up-and-down by arcuate movement of the links 2. A second pair of stabiliser forks 4 are pivotally coupled at 44 towards the forward ends of the links 2. At their upper ends the stabiliser forks are mutually coupled by a transverse portion 5 to which are fixed a mudguard 45 and a rearwardly-projecting coupling member 6. A guide rod 46 is pivotally coupled to the member 6 so that as the stabiliser forks 4 move up-and-down with the wheel, the rod 46 is slidably guided axially within the steering column 40. Since the stresses on the guide rod are relatively small a lightweight and inexpensive guide arrangement can be used within the steering column 40. The column may optionally include an hydraulic damper unit if desired.

On each side of the wheel 42, a respective compression spring 10 is mounted about the respective stabiliser fork 4 to act against an abutment in the form of a bush 11 fixed with the respective first fork 1 and through which the second fork 4 is slidably guided. In fact, it is possible to simplify the construction still further by omitting the guide rod 46 altogether provided the bushes 11 are sufficiently robust to slidably guide the forks 4 without lateral movement. The lower end of the spring 10 acts against a cup-shaped abutment 12 on the lower end of the fork 4. It will be appreciated that the springs need not necessarily be mounted on the forks 4 and could in fact act between the fixed fork 1 and any component which moves with the stabiliser forks 4. For example, the springs could act on the links 2. It will also be noted that turn screw couplings 48 and 49 are incorporated in the links 4 to allow for vertical alignment of the wheel 42, although this may not be necessary. The springs are protected from ingress of dirt by tubular covers 60.

Rebound stops 62 may be secured to the forks above the bushes 11 to limit the downward movement of the wheel.

A rubber shock-absorbing ring is preferably interposed between each bush 11 and stop 62.

The stabiliser forks do not transmit any appreciable forces. Consequently they can be of relatively thin lightweight bar.

The links 2 could be arranged to project forwardly or rearwardly as desired.

Although the arrangement of Fig. 1 is described as being applied to a front wheel it could equally be applied to the rear wheel of a pedal cycle.

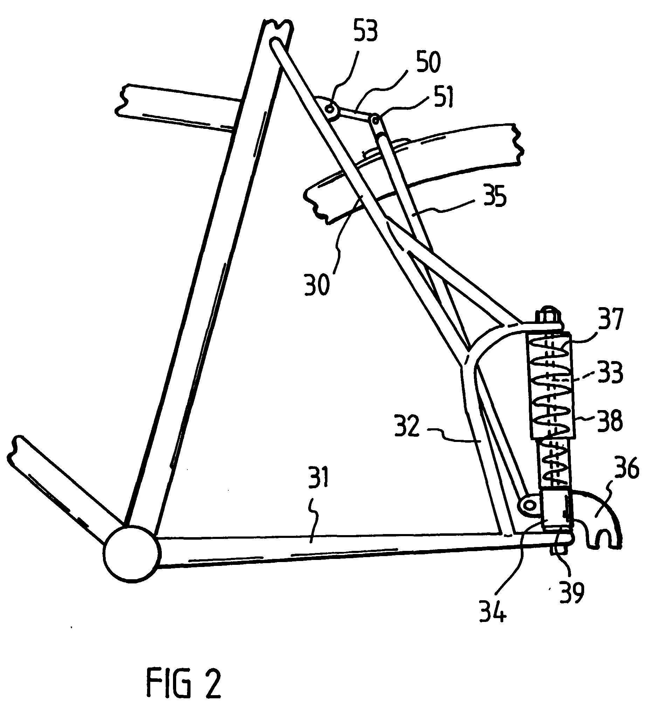

Fig. 2 shows a modified form of the suspension which is applied to a rear wheel, although again, it could be applied to a front wheel. On each side of the rear wheel (not shown for convenience) a rear fork 30 and bottom bar 31, forming part of the cycles frame, are connected by a C-shaped member 32. A guide pin 33 joins the free ends of the member 32 to receive an apertured guide bush 34 which is pivotally coupled to the lower end of a stabiliser fork 35. Both stabiliser forks 35 are linked at their upper ends as described below. A pair of spaced mounting lugs 36 are secured to the lower ends of the two bushes 34 to extend rearwardly and mount the spindle of the rear wheel therebetween.

A compression spring 37 is mounted about each pin 33 to buffer upward movement of the bushes 34. Again, the spring is protected by a cover 38. Downward movement of the bushes 34 is buffered by annular rubber rings 39, located about the pins 33.

A link arm 50 of triangular outline is pivotally coupled at its apex 51 to the upper ends of the stabiliser forks 35. The base of the triangular link includes a pivot tube which is pivotally coupled between spaced lugs 53 which are fixed with the forks 30. The link 50 thus permits free up-down guided movement of the stabiliser forks 35 whilst restraining their lateral movement.

The C-shaped members 32 may be provided as add-on units engaged with the cut ends of the rear fork 30 and bottom bars 31 after removal of the conventional rear axle mountings. The members 32 may, for example, have spigots which are fixed into the cut bars by pinning or by slotting the cut ends and applying clamping bands for example. The members 32 could also be provided with cylindrical sockets to receive the cut ends of the forks 30 and bars 31, and secured thereto in the same manner.

In each of the arrangements described the upper ends of the stabiliser forks could be guided for upward movement by pins which slide in suitable guide bushes fixed with the frame. It will also be appreciated that, in each case, elastomeric shock absorbers could be used in place of coil springs if desired.

Suitable drive chains and gearing of known form will of course be incorporated between the pedals and rear wheel. Brakes will conveniently be mounted from the stabiliser forks to maintain a substantially constant relationship to the wheel rim.

The inexpensive suspension arrangements described thus allow the wheels to ride up-and-down over bumps etc. to reduce or smooth out vertical movements, thus substantially improving the comfort of the ride.

Whilst the above description lays emphasis on those areas which, in combination, are believed to be new, protection is claimed for any inventive combination of the features disclosed herein.

## Claims

1. A pedal cycle comprising:
- a frame;
- a first pair of generally upright forks (1; 30) fixed with or steerably mounted from the frame;
- a wheel (42) mounted on a spindle (43) between said first pair of forks;
- a second pair of forks (4; 35) mounted in a generally upright position on opposite sides of said wheel, the upper ends (5; 51) of the second forks being mutually joined and the lower ends of said forks carrying spindle mounts for said wheel; and
- guide means (11; 50) arranged to permit movement of said second pair of forks generally in an up-and-down direction relative to said first pair of forks whilst constraining lateral movement of said second forks;
characterised by a pair of resilient shock-absorbing elements (10; 37), one on each side of the wheel, each acting between the lower end of a respective second fork adjacent to the respective spindle mount, or a component that moves therewith, and an abutment (11) fixed with a respective one of the first pair of forks.

2. A pedal cycle according to Claim 1, in which respective coupling means (2; 34) connect the lower ends of the two pairs of forks whilst permitting relative up-and-down movement therebetween.

3. A pedal cycle according to Claim 2, in which said coupling means (34) is arranged to slidably guide the second forks for up-and-down movement relative to the first forks.

4. A pedal cycle according to Claim 2, in which said coupling means comprises a pair of links (2), one on each side of the wheel, pivotally joining the lower ends of the two pairs of forks.

5. A pedal cycle according to any preceding claim, in which the second pair of forks are slidably guided to move up-and-down.

6. A pedal cycle according to Claim 5, in which the second pair of forks are slidably guided by said abutment means (11) for the resilient elements.

7. A pedal cycle according to Claim 5, in which the upper ends of the second pair of forks are coupled to a guide rod (46) which is slidably mounted in guide means (40).

8. A pedal cycle according to Claim 7, in which there is a pivotal connection (6) between the second forks and the guide rod.

9. A pedal cycle according to Claim 5, in which the upper ends of the second pair of forks are articulated to the frame or the first forks by a link member (50).

10. A pedal cycle according to Claim 9, in which said link member (50) is of a generally triangular configuration with an apex of the triangle pivotally coupled to the second forks.
